(19) Europäisches Patentamt
European Patent Office
Office européen des brevets

(11) Veröffentlichungsnummer: **0 029 959**
**B1**

# (12) EUROPÄISCHE PATENTSCHRIFT

(45) Veröffentlichungstag der Patentschrift: **19.10.83**

(51) Int. Cl.³: **C 09 B 62/405,** C 09 B 67/26, D 06 P 1/384, D 21 H 3/80

(21) Anmeldenummer: **80107191.1**

(22) Anmeldetag: **19.11.80**

## (54) Flüssigkristalline Phase eines Azoreaktivfarbstoffs und deren Verwendung zum Färben und Bedrucken von natürlichen und synthetischen Substraten.

(30) Priorität: **30.11.79 DE 2948291**

(43) Veröffentlichungstag der Anmeldung: **10.06.81 Patentblatt 81/23**

(45) Bekanntmachung des Hinweises auf die Patenterteilung: **19.10.83 Patentblatt 83/42**

(84) Benannte Vertragsstaaten: **CH DE FR GB IT LI**

(56) Entgegenhaltungen:
**DE-B-1 191 059**
**FR-A-2 124 359**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Koll, Jochen, Ing.-grad., Am Telegraf 40, D-5068 Odenthal 3 (DE)**
Erfinder: **Paulat, Volker, Dr., Menzelweg 1, D-4019 Monheim (DE)**
Erfinder: **Hörnle, Reinhold, Dr., Hufelandstrasse 42, D-5000 Köln (DE)**
Erfinder: **Mölls, Hans-Heinz, Dr., Max-Beckmann-Strasse 29, D-5090 Leverkusen (DE)**
Erfinder: **Nonn, Konrad, Dr., Otto Stange Strasse 17, D-5090 Leverkusen (DE)**

EP 0 029 959 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Flüssigkristalline Phase eines Azoreaktivfarbstoffs und deren Verwendung zum Färben und Bedrucken von natürlichen und synthetischen Substraten

Gegenstand der Erfindung ist die lyotrope flüssigkristalline wäßrige Phase des in Wasser bei Raumtemperatur in einer Konzentration von 12—35% vorliegenden Farbstoffes der Formel

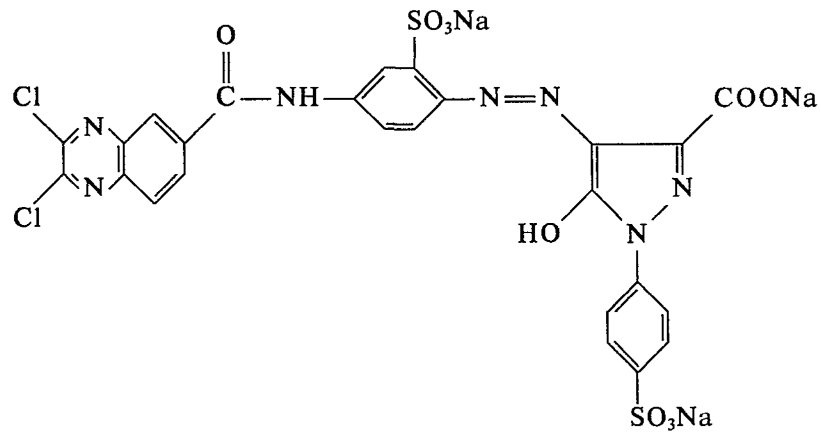

(I)

sowie die Verwendung dieser lyotropen flüssigen Kristalle zur Herstellung von Färbebädern und Druckpasten für das Färben und/oder Bedrucken von natürlichen und synthetischen Substraten, insbesondere Baumwolle, Wolle, Regeneratcellulose, Papier und Leder.

Diese Phase zeigt die für flüssige Kristalle charakteristische Doppelbrechung und Bildung eines strukturierten Beugungsbildes bei der Röntgenkleinwinkelbeugung.

Die Charakterisierung dieser lyotropen flüssigen Kristalle erfolgt, wie üblich, durch die infolge der Doppelbrechung sich ausbildenden Interferenzfarben beim Einbringen dieser flüssigen Kristalle zwischen gekreuzte Nicols eines Polarisationsmikroskopes und/oder durch das strukturierte Beugungsbild bei der Röntgenkleinwinkelbeugung mit Cu-Kα-Stahlung in einer Kießig-Kammer (vgl. z. B. G. H. Brown: Flüssige Kristalle; Chem. uns. Zeit, 2, 1968, S. 43—51 und Eckert und Kramer: Pharmazie uns. Zeit 1, 1972 (116—121).

Die flüssigkristalline Phase bleibt auch bei Zusatz geringer Mengen anorganischer Salze, insbesondere Natriumchlorid, Natriumsulfat, Natriumacetat oder üblichen Puffergemischen und/oder wassermischbarer organischer Lösungsmittel wie Alkohole, Polyole, deren Äther oder Ester, Amide und/oder hydrotroper Substanzen wie Harnstoff erhalten.

Die erfindungsgemäße physikalische Form des Farbstoffes wird erhalten, wenn der nahezu salzfreie Farbstoff der Formel I mit Wasser innerhalb des o. g. Konzentrationsbereichs verflüssigt wird. Man kann auch direkt zu der neuen physikalischen Form gelangen, wenn man die bei der üblichen Synthese anfallende stark salzhaltige wäßrige Lösung bzw. Mischung der Druckpermeation unterwirft.

Die erfindungsgemäße neue physikalische Form des Farbstoffs stellt eine außergewöhnlich lager- und hydrolysestabile Flüssigformierung dar.

### Beispiel 1

20 g des ganz oder nahezu salzfreien Farbstoffes der Formel I werden mit 80 g Wasser im Verlaufe von mehreren Stunden bei Raumtemperatur unter Rühren verflüssigt.

Man erhält eine hochkonzentrierte, lyotrope flüssigkristalline Phase, die lagerstabil und hydrolysebeständig ist und welche charakteristische Interferenzfarben beim Einbringen zwischen gekreuzte Nicols im Polarisationsmikroskop zeigt. Beim Einrühren dieser Phase in Wasser und nach Zugabe von Verdickungsmitteln sowie der in der Färberei üblichen Hilfsmittel erhält man eine Druckpaste zum Bedrucken von natürlichen und regenerierten Cellulosefasern in rotstichig gelben Tönen.

## Patentansprüche

1. Lyotrope flüssigkristalline Phase des in Wasser bei Raumtemperatur in einer Konzentration von 12—35% vorliegenden Farbstoffes der Formel

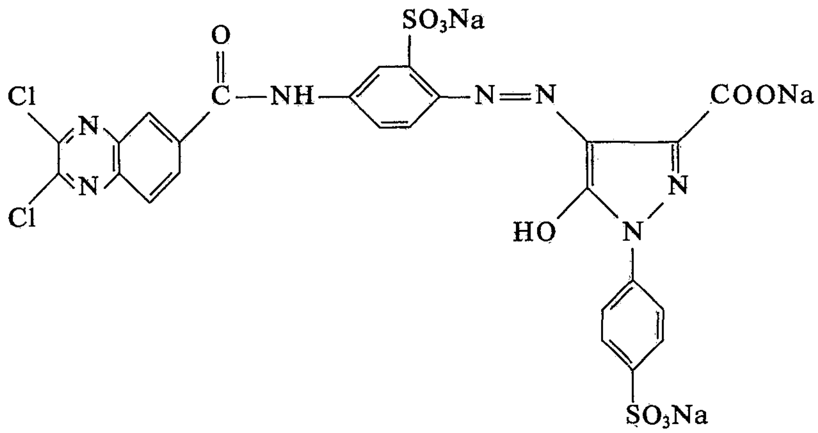

2. Verwendung der lyotropen flüssigkristallinen Phase des Farbstoffes des Anspruches 1 zur Herstellung von Färbebädern und Druckpasten für das Färben und/oder Bedrucken von natürlichen und synthetischen Substraten, insbesondere Baumwolle, Wolle, Regeneratcellulose, Papier und Leder.

**Claims**

1. Lyotropic liquid crystal phase of the dyestuff of the formula

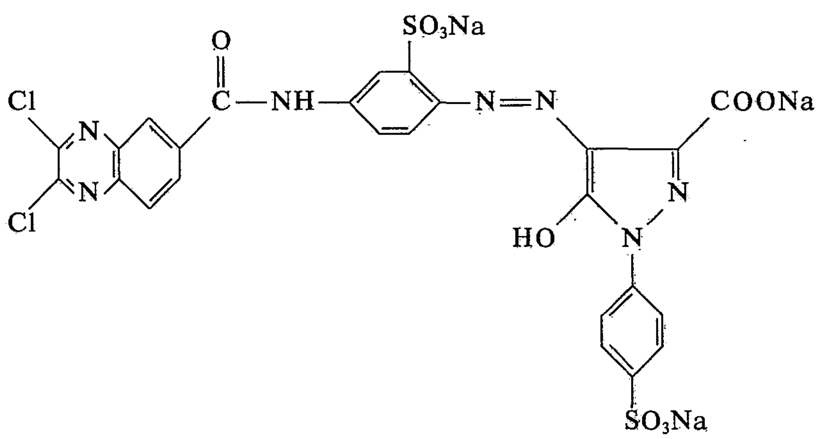

present in water in a concentration of 12—35% at room temperature.

2. Use of the lyotropic liquid crystal phase of the dyestuff of Claim 1 for the preparation of dyebaths and printing pastes for dyeing and/or printing natural and synthetic substrates, in particular cotton, wool, regenerated cellulose, paper and leather.

**Revendications**

1. Phase cristalline liquide lyotrope du colorant existant dans l'eau à la température ambiante à une concentration de 12 à 35%, de formule

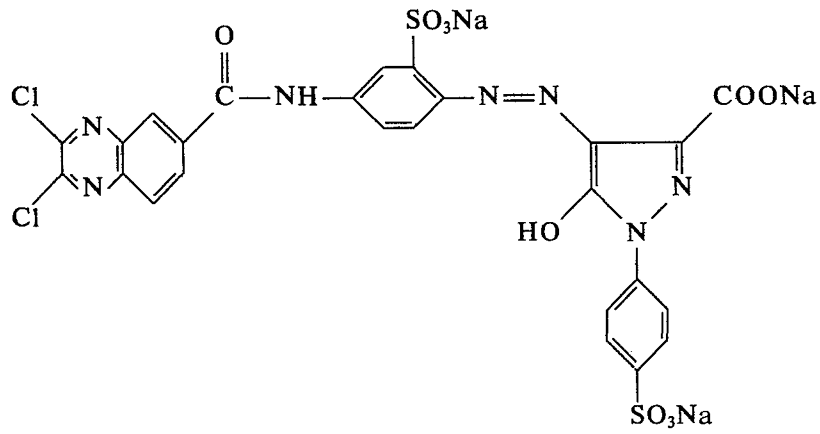

2. Utilisation de la phase cristalline liquide lyotrope du colorant suivant la revendication 1 pour la préparation de bains de teinture et de pâtes d'impression pour teindre et/ou imprimer des substrats naturels et synthétiques, notamment de coton, de laine, de cellulose régénérée, de papier et de cuir.